# EUROPÄISCHE PATENTSCHRIFT

(11) **EP 1 276 945 B1**
(45) Veröffentlichungstag und Bekanntmachung des Hinweises auf die Patenterteilung: **08.06.2005**
(21) Anmeldenummer: 01927864.7
(22) Anmeldetag: 04.04.2001
(51) Int. Cl.: E05B 49/00, B60R 25/00

(54) **SICHERUNGSVERFAHREN UND ABFRAGEEINHEIT SOWIE SICHERUNGSSYSTEM ZUR DURCHFÜHRUNG DES SICHERUNGSVERFAHRENS**
SECURING METHOD, INTERROGATION UNIT AND SECURING SYSTEM FOR IMPLEMENTING THE SECURING METHOD
PROCEDE DE PROTECTION, UNITE D'INTERROGATION ET SYSTEME DE PROTECTION POUR LA MISE EN OEUVRE DUDIT PROCEDE DE PROTECTION

(30) Priorität: 19.04.2000 DE 10019277
(43) Veröffentlichungstag der Anmeldung: 22.01.2003
(73) Patentinhaber: Conti Temic microelectronic GmbH, 90411 Nürnberg (DE)
(72) Erfinder: HAAS, Heinrich, 88074 Meckenbeuren (DE); KNEPPER, Udo, 88085 Langenargen (DE); MÜLLER, Karlheinz, 88045 Friedrichshafen (DE); SCHULER, Rolf, 88682 Salem (DE)
(86) Internationale Anmeldenummer: PCT/EP2001/003795
(87) Internationale Veröffentlichungsnummer: WO 2001/083920

(56) Entgegenhaltungen:
- EP-A- 0 992 408
- WO-A-00/12846
- WO-A-00/12848
- DE-A- 4 020 445

## Beschreibung

Die Erfindung betrifft ein Sicherungsverfahren gemäß dem Oberbegriff des Patentanspruchs 1. Sie betrifft ferner eine Abfrageeinheit zur Durchführung des Sicherungsverfahren und ein Sicherungssystem in dem das Sicherungsverfahren verwendet wird.

Aus der EP 0 787 875 A2 ist ein schlüsselloses Sicherungssystem für eine Schließanlage eines Kraftfahrzeugs bekannt, das eine dem Kraftfahrzeug zugeordnete, auf die Schließanlage wirkende Abfrageeinheit und mehrere von Benutzern bei sich zu tragende mobile Antworteinheiten aufweist, wobei die Abfrageeinheit ein Abfragesignal aussendet und prüft, ob mindestens eine der Antworteinheiten das Abfragesignal mit einem Antwortsignal beantwortet, das einen zur Entsicherung der Schließanlage berechtigten Code als Information enthält. Trifft dies zu, wird die Schließanlage durch das Sicherungssystem entsichert.

Der wesentliche Nachteil dieses Sicherungssystems liegt darin, daß unbefugte Benutzer sich unbemerkt vom berechtigten Benutzer durch einen Relaisangriff Zugriff zum Fahrzeug beschaffen können, indem sie über Relaisstationen eine Funkverbindung zwischen der Abfrageeinheit und der Antworteinheit des berechtigten Benutzers herstellen und über diese Funkverbindung den zur Entsicherung berechtigten Code der Abfrageeinheit zuführen.

Darüber hinaus sind aus der WO 00/12848, WO 00/ 12846 , DE 40 20 445 oder EP 0992408 Sicherungsverfahren zu entnehmen, bei denen die Signallaufzeit erfasst und mit einem vorgegebenen Wert wird, um Missbrauchsfälle zu erkennen.

Der Erfindung liegt daher die Aufgabe zugrunde, ein Sicherungsverfahren gemäß dem Oberbegriff des Patentanspruchs 1 anzugeben, das eine hohe Sicherheit gegenüber Eingriffen von unbefugten Benutzern aufweist.

Die Aufgabe wird durch die Merkmale des Patentanspruchs 1 gelöst. Vorteilhafte Weiterbildungen und Ausgestaltungen der Erfindung ergeben sich aus den weiteren Ansprüchen. Entsprechendes gilt für den unabhängigen Vorrichtungsanspruch 8.

Der Erfindung liegt die Erkenntnis zugrunde, daß ein Signal, das von der Abfrageeinheit als Abfragesignal ausgesendet und als Antwortsignal empfangen wird, eine bestimmte Signallaufzeit aufweist, die im Normalfall der Summe der Signallaufzeiten in der Abfrageeinheit, in der Antworteinheit und der abstandsabhängigen Signallaufzeit auf der Übertragungsstrecke zwischen der Abfrageeinheit und Antworteinheit entspricht und die im Falle einer Übertragung über Relaisstationen um einen zusätzlichen Betrag erhöht wird, der der Summe der Signallaufzeiten in den Relaisstationen und der Signallaufzeit auf der Übertragungsstrecke zwischen den Relaisstationen entspricht, wobei der von den Relaisstationen gelieferte Beitrag zur gesamten Signallaufzeit wesentlich ist und somit auf einfache Weise erkennbar ist.

Innerhalb eines Überwachungszeitraums wird geprüft, ob die Signallaufzeit des von der Abfrageeinheit als Abfragesignal ausgesendeten und von der Antworteinheit als Antwortsignal zurückgesendeten Signals, d. h. die Signallaufzeit auf der Übertragungsstrecke von der Abfrageeinheit über die Antworteinheit zurück zur Abfrageeinheit, größer ist als ein vorgegebener Wert. Ist die Signallaufzeit größer als der vorgegebene Wert, so ist dies ein Indiz dafür, daß die Antworteinheit sich außerhalb einer zulässigen Reichweite der Abfrageeinheit befindet und von Unbefugten versucht wird, über Relaisstationen eine Verbindung zwischen der Abfrageeinheit und Antworteinheit aufzubauen, um eine durch das Sicherungsverfahren zu sichernde Sicherungseinrichtung zu entsichern. Dem Antwortsignal wird daher keine Benutzungsberechtigung zugeordnet und die Sicherungseinrichtung somit nicht zur Entsicherung freigegeben.

Erfindungsgemäß enthält das Abfragesignal als Information eine erste Datenbitfolge und das Antwortsignal eine zweite Datenbitfolge als Information, wobei die Datenbits der Datenbitfolgen in Bitzellen gleicher Größe übertragen werden, und die erste Datenbitfolge so viele Datenbits aufweist, daß während des Empfangs der zweiten Datenbitfolge noch Datenbits der ersten Datenbitfolge ausgesendet werden. Dabei wird der Überwachungszeitraum derart gewählt, daß die Abfrageeinheit in diesem Zeitraum sowohl Datenbits aussendet als auch Datenbits empfängt.

Die Signallaufzeit wird vorzugsweise innerhalb des Überwachungszeitraums als zeitlicher Abstand zwischen einer von der Abfrageeinheit ausgesendeten Bitzelle der ersten Datenbitfolge und einer vor dem Aussenden der nächsten Bitzelle empfangenen Bitzelle der zweiten Datenbitfolge ermittelt.

In einer vorteilhaften Weiterbildung des Verfahrens wird die erste Datenbitfolge derart generiert, daß sie einen Abfragecode mit nachfolgendem Füllcode aufweist, wobei der Füllcode während des Überwachungszeitraums übertragen wird und vorteilhafterweise als Pseudo-Zufallscode generiert wird.

Vorzugsweise erzeugt die Antworteinheit aus dem Abfragecode einen Antwortcode, der in der Antworteinheit bitweise mit zeitgleich empfangenen Bits des Füllcodes codiert und als die zweite Datenbitfolge zur Abfrageeinheit gesendet wird. In der Abfrageeinheit wird die zweite Datenbitfolge dann zur Wiedergewinnung des Antwortcodes bitweise mit den zeitgleich ausgesendeten Bits des Füllcodes decodiert. Ist das Ergebnis der Decodierung gleich einem in der Abfrageeinheit bereitgestellten Berechtigungscode und ist die ermittelte Signallaufzeit kleiner als der vorgegebene Wert, so wird dem Antwortsignal eine Benutzungsberechtigung zugeordnet, d. h. der Benutzer der Antworteinheit wird als benutzungsberechtigt identifiziert, und die Sicherungseinrichtung wird entsichert oder zur Entsicherung freigegeben.

Die Abfrageeinheit umfaßt vorzugsweise eine im Vollduplexverfahren betriebene Sende-/Empfangseinheit zum Aussenden des Abfragesignals und gleichzeitigen Empfangen des Antwortsignals sowie eine auf die Sicherungseinrichtung wirkende Auswerteeinrichtung zum Auswerten des empfangenen Antwortsignals und Entsichern der Sicherungseinrichtung in Abhängigkeit des Antwortsignals. Die Auswerteeinrichtung umfaßt Laufzeitauswertemittel, die die Signallaufzeit des als Abfragesignal ausgesendeten und als Antwortsignal empfangenen Signals ermitteln und eine Entsicherung der Sicherungseinrichtung verhindern, wenn die ermittelte Signallaufzeit größer ist als der vorgegebene Wert.

Mit einer derartigen Abfrageeinheit und mindestens einer mit dieser zusammenwirkenden, vom berechtigten Benutzer bei sich zu tragenden mobilen Antworteinheit, läßt sich ein schlüsselloses Sicherungssystem realisieren, mit dem Objekte, vorzugsweise Kraftfahrzeuge, gegen unbefugte Benutzung sicherbar sind.

Die Erfindung wird nachfolgend anhand von Ausführungsbeispielen und Figuren näher erläutert werden. Es zeigen:
- Figur 1: ein schlüsselloses Sicherungssystem zur Sicherung eines Objekts gegen unbefugte Benutzung,
- Figur 2: ein Übertragungsprotokoll zur Übertragung von Daten zwischen einer Abfrageeinheit und einer Antworteinheit des Sicherungssystems aus Figur 1.

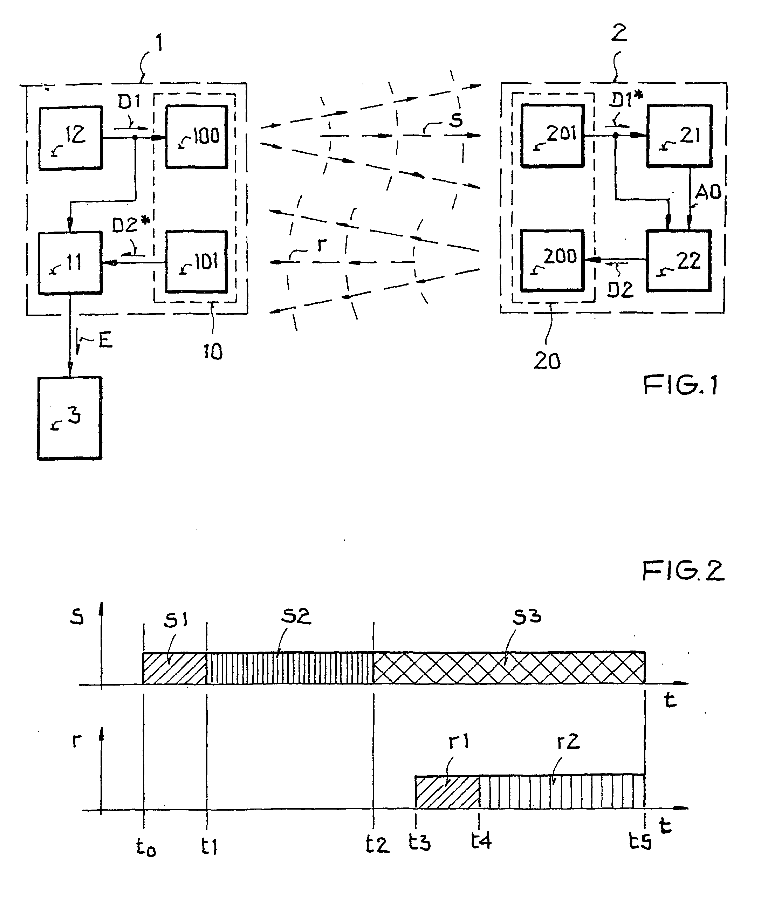

Gemäß Figur 1 umfaßt das Sicherungssystem, mit dem ein Objekt, beispielsweise ein Kraftfahrzeug, gegen unbefugte Benutzung gesichert werden soll, eine dem zu sichernden Objekt zugeordnete und an diesem an einer von Außen unzugänglichen Stelle vorgesehene Abfrageeinheit 1 und eine einem nutzungsberechtigten Benutzer zugeordnete Antworteinheit 2, die von diesem bei sich zu tragen ist, wenn er sich Zugriff zum zu sichernden Objekt beschaffen will. Das Sicherungssystem kann aber auch mehrere Antworteinheiten 2 aufweisen, die dem gleichen oder unterschiedlichen Benutzern zugeordnet sind.

Die Abfrageeinheit 1 umfaßt eine Sende-Empfangs-Einheit 10 mit einem Sendeteil 100 und einem Empfangsteil 101, sowie einen Signalerzeuger 12 und eine Auswerteeinrichtung 11. Die Antworteinheit 2 umfaßt eine Sende-Empfangs-Einheit 20 mit einem an den Sendeteil 100 der Abfrageeinheit 1 angepaßten Empfangsteil 201 und einem an den Empfangsteil 101 der Abfrageeinheit 1 angepaßten Sendeteil 200 sowie einen Verschlüssler 21 und einen Codierer 22. Zur Spannungsversorgung weist sie ferner eine oder mehrere Batterien auf; denkbar ist aber auch eine Spannungsversorgung, bei der Energie durch eine induktive Kopplung von der Abfrageeinheit 1 zur Antworteinheit 2 übertragen wird.

Die Abfrageeinheit 1 und die Antworteinheit 2 kommunizieren über eine drahtlose Übertragungsstrecke, beispielsweise über eine Funkstrecke, miteinander, wobei die Übertragung im Vollduplexverfahren erfolgt, d. h. es ist eine gleichzeitige Signalübertragung über einen Hinkanal von der Abfrageeinheit 1 zur Antworteinheit 2 und über einen Rückkanal von der Antworteinheit 2 zur Abfrageeinheit 1 möglich. Im vorliegenden Ausführungsbeispiel ist der Hinkanal beispielsweise als 125-kHz-Kanal und der Rückkanal beispielsweise als hochfrequenter 433-MHz-Kanal ausgeführt, wobei die Reichweite des Hinkanals, d. h. der Abfrageinheit 1, vorteilhafterweise maximal 3 m beträgt. Die Signalübertragung über den Hinkanal kann alternativ zur Funkübertragung auch auf induktivem Wege über eine induktive Kopplung zwischen der Abfrageeinheit 1 und Antworteinheit 2 erfolgen. Dies ist insbesondere dann vorteilhaft, wenn die Antworteinheit 2 batterielos betrieben wird, weil dann durch die Signalübertragung gleichzeitig auch die zur Spannungsversorgung erforderliche Energie von der Abfrageeinheit 1 zur Antworteinheit 2 übertragen wird.

Die Abfrageeinheit 1 erzeugt mit dem Signalerzeuger 12 eine erste Datenbitfolge D1, die in aufeinanderfolgenden Bitzellen gleicher Größe jeweils ein Datenbit enthält. Die erste Datenbitfolge D1 wird der Auswerteeinrichtung 11 und dem Sendeteil 100 der Abfrageeinheit 1 zugeführt, über den Sendeteil 100 als Abfragesignal s zum Empfangsteil 201 der Antworteinheit 2 übertragen und über den Empfangsteil 201 dem Verschlüssler 21 und dem Codierer 22 als empfangene erste Datenbitfolge D1 * zugeführt. Der Verschlüssler 21 und Codierer 22 erzeugen aus der empfangenen ersten Datenbitfolge D1* eine zweite Datenbitfolge D2, die dem Sendeteil 200 der Antworteinheit 2 zugeführt wird, über den Sendeteil 200 als Antwortsignal r zum Empfangsteil 101 der Abfrageeinheit 1 übertragen wird und über den Empfangsteil 101 als empfangene zweite Datenbitfolge D2* der Auswerteeinrichtung 11 zur Auswertung zugeführt wird. Die Datenbits der Datenbitfolgen D1, D1*, D2, D2* sind dabei in Bitzellen gleicher Größe enthalten, d. h. die Datenbitfolgen D1, D1*, D2, D2* werden allesamt seriell mit gleichem Bittakt übertragen, beispielsweise mit einem Bittakt von 2 KBit/s, wobei eine Bittaktperiode der Breite einer Bitzelle entspricht. Die Auswerteeinrichtung 11 erzeugt in Abhängigkeit des Informationsgehalts der ersten Datenbitfolge D1 und der empfangenen zweiten Datenbitfolge D2* ein Signal E zur Entsicherung einer Sicherungseinrichtung 3, welche beispielsweise als Schließanlage und/oder Wegfahrsperrvorrichtung eines Kraftfahrzeugs ausgeführt ist.

Die Signalübertragung zwischen der Abfrageeinheit 1 und Antworteinheit 2 erfolgt nach einem bestimmten Übertragungsprotokoll. Das Abfragesignal s wird dabei in regelmäßigen Abständen ausgesendet. Gemäß Figur 2 setzt sich das Abfragesignal s aus drei Teilen s1, s2, s3 zusammen, und zwar aus einem ab dem Zeitpunkt t0 ausgesendeten ersten Teil s1 zur Aktivierung der Antworteinheit 2, einem ab dem Zeitpunkt t1 ausgesendeten zweiten Teil s2, der einem Abfragecode entspricht, und einem ab dem Zeitpunkt t2 ausgesendeten dritten Teil s3, der einem Füllcode entspricht, wobei der Abfragecode s2 und Füllcode s3 zusammen die erste Datenbitfolge D1 bilden und wobei der Abfragecode s2 ein Code mit fest vorgegebener Bitlänge ist, beispielsweise ein 64-Bit-Code, und der Füllcode s3 ein Pseudo-Zufallscode ist. Das Antwortsignal r setzt sich aus einem zum Zeitpunkt t3 ausgesendeten ersten Teil r1 und einem zum Zeitpunkt t4 ausgesendeten zweiten Teil r2 zusammen, wobei der erste Teil r1 einen Synchronisationsteil zur Synchronisierung des Empfangsteils 101 auf den Bittakt der zweiten Datenbitfolge D2 darstellt und wobei der zweite Teil r2 der zweiten Datenbitfolge D2 entspricht, welche beispielsweise ein 64-Bit-Code ist.

Den Zeitabschnitt t2 bis t3 benötigt der Verschlüssler 21, um aus dem Abfragecode einen Antwortcode A0 zu berechnen. Die Berechnung des Antwortcodes A0 erfolgt dabei nach einem bestimmten Algorithmus, der auf den Abfragecode und einen der Antworteinheit 2 eindeutig zugeordneten Identifizierungsschlüssel angewendet wird. Zum Zeitpunkt t4 ist der Empfangsteil 101 der Abfrageeinheit 1 bereit zur Übernahme der Datenbits aus der als Antwortsignal r zurückgesendeten zweiten Datenbitfolge D2 und es wird mit dem bitweisen Aussenden der zweiten Datenbitfolge D2 begonnen. Zum Zeitpunkt t5 ist mit dem Aussenden des letzten Datenbits der zweiten Datenbitfolge D2 die Signalübertragung beendet und es werden ab diesem Zeitpunkt t5 auch keine weiteren Bits des Füllcodes ausgesendet.

Bis zum Zeitpunkt t4 werden ferner die Bittakte der ersten und zweiten Datenbitfolge D1, D2 aufeinander synchronisiert, so daß zwischen den anschließend von der Abfrageinheit 2 empfangenen und ausgesendeten Bitzellen ein Phasenfehler von 0° besteht. Ab dem Zeitpunkt t4 wird die zweite Datenbitfolge D2 bitweise generiert und ausgesendet. Hierzu wird der Antwortcode A0 bitweise und synchron mit zeitgleich empfangenden Bits des Füllcodes im Codierer 22 codiert, beispielsweise durch eine EXOR-Verknüpfung, und jedes so erhaltene Bit unverzüglich als Datenbit der zweiten Datenbitfolge D2 dem Sendeteil 200 zum Aussenden zugeführt. Auf diese Weise wird sichergestellt, daß die zweite Datenbitfolge D2 kohärent zur empfangenen ersten Datenbitfolge D1* ausgesendet wird, d. h. ab dem Zeitpunkt t4 wird ein zusammenhängender Datenstrom von Abfrageeinheit 1 ausgesendet und empfangen. Jeder Bitzelle der empfangenen zweiten Datenbitfolge D2* ist somit eine Bitzelle der ersten Datenbitfolge D1 zugeordnet, wobei die Bitinformation jeder Bitzelle der empfangen zweiten Datenbitfolge D2 * von der Bitinformation der jeweils zugeordneten Bitzelle der ersten Datenbitfolge D1 mitbestimmt wird, und wobei der zeitliche Abstand zwischen den Bitzellen der empfangenen zweiten Datenbitfolge D2* und den diesen jeweils zugeordneten Bitzellen der ersten Datenbitfolge D1 gleich ist.

Die Auswerteeinrichtung 11 weist einen Decodierer auf, mit dem die empfangene zweite Datenbitfolge D2* bitweise mit zeitgleich gesendeten Bits des Füllcodes decodiert wird, und sie weist Auswertemittel auf, mit denen geprüft wird, ob das Ergebnis der Decodierung mit einem Berechtigungscode übereinstimmt. Der Berechtigungscode ist dabei ein in der Auswerteeinrichtung 11 aus den Abfragecode generierter Code, der dem in der Antworteinheit 2 generierten Antwortcode A0 entspricht, wenn die Sicherungseinrichtung 3 mit der Abfrageeinheit 1 berechtigterweise entsichert werden soll, d. h. der Berechtigungscode entspricht dem als Antwort auf den Abfragecode "erwarteten" Antwortcode. Stimmt das Ergebnis der Decodierung mit dem Berechtigungscode überein, so bedeutet dies, daß der Benutzer der Antworteinheit 2 befugt ist, das zu sichernde Objekt zu benutzen, und daß die Signallaufzeit des als Abfragesignal s ausgesendeten und als Antwortsignal r empfangenen Signals kleiner ist als eine Bittaktperiode, da die einander entsprechenden Bits des Antwortcodes A0 und der empfangenen zweiten Datenbitfolge D2* jeweils in gleichen Zeitfenstern codiert bzw. decodiert wurden. Die Prüfung, ob das Ergebnis der Decodierung gleich dem Berechtigungscode ist, ist somit gleichzeitig auch eine Prüfung, cb die Signallaufzeit kleiner ist als eine Bittaktperiode. Falls das Ergebnis der Decodierung hingegen vom Berechtigungscode abweicht, bedeutet dies, daß der Benutzer nicht befugt ist, das zu sichernde Objekt zu benutzen, oder daß die Signallaufzeit größer als eine Bittaktperiode ist, was ein Hinweis darauf ist, daß Unbefugte versuchen die Übertragungsstrecke zwischen der Abfrageeinheit 1 und der Antworteinheit 2 durch Relaisstationen, die eine erhebliche Signallaufzeiterhöhung bewirken, zu verlängern. In den Fällen, in denen das Ergebnis der Decodierung vom Berechtigungscode abweicht, wird daher eine Entsicherung der Sicherungseinrichtung 3 verhindert.

Bei großen Bittaktperioden kann die Signallaufzeit auch bei einer Signalübertragung über Relaisstationen kleiner als eine Bittaktperiode sein. In diesen Fällen ist das Sicherungssystem nicht in der Lage, allein durch einen Vergleich des Ergebnisses der Decodierung mit dem Berechtigungscode zu erkennen, ob die Signalübertragung über Relaisstationen erfolgt. Um auch diese Fälle zu identifizieren, weist die Auswerteeinrichtung 11 Laufzeiterfassungsmittel auf, mit denen während eines durch die Zeitpunkte t4 und t5 definierten Überwachungszeitraums der zeitliche Abstand zwischen einer von der Abfrageeinheit 1 gesendeten und einer unmittelbar nach Beginn des Aussendens dieser Bitzelle von der Abfrageeinheit 1 empfangenen Bitzelle als Signallaufzeit ermittelt wird und mit denen geprüft wird, ob diese ermittelte Signallaufzeit kleiner ist als ein vorgegebener Wert. Der vorgegebene Wert entspricht dabei der Signallaufzeit, die man im Normalfall, d. h. bei einer direkten Signalübertragung ohne zwischengeschaltete Relaisstationen, erhält zuzüglich eines Unsicherheitsfaktors. Ist die ermittelte Signallaufzeit größer als der vorgegebene Wert, so ist dies ein Indiz dafür, daß die Signalübertragung zwischen der Abfrageeinheit 1 und Antworteinheit 2 nicht mehr direkt sondern über Relaisstationen erfolgt und daß Unbefugte somit versuchen, sich Zugang zum zu sichernden Objekt zu beschaffen.

Das Sicherungssystem identifiziert einen Benutzer als berechtigten Benutzer, wenn die ermittelte Signallaufzeit kleiner ist als der vorgegebene Wert und das Ergebnis der Decodierung der von der Abfrageeinheit 1 empfangenen zweiten Datenbitfolge D2* mit dem als Antwortcode erwarteten Berechtigungscode übereinstimmt. Nur dann wird die Sicherungseinrichtung 3 durch das der Sicherungseinrichtung 3 zugeführte Signal E entsichert oder zur Entsicherung freigegeben.

## Patentansprüche

1. Sicherungsverfahren zur Sicherung eines Objekts gegen unbefugte Benutzung, bei dem ein Abfragesignal (s) von einer dem Objekt zugeordneten Abfrageeinheit (1) ausgesendet wird und bei dem geprüft wird, ob mindestens eine einem Benutzer zugeordnete Antworteinheit (2) das Abfragesignal (s) mit einem Antwortsignal (r) beantwortet, das einen zur Entsicherung einer Sicherungseinrichtung (3) berechtigenden Code als Information enthält, wobei die Entsicherung der Sicherungseinrichtung (3) verhindert wird, wenn eine Signallaufzeit eines während eines Überwachungszeitraums (t4-t5) von der Abfrageeinheit (1) als Abfragesignal (s) ausgesendeten und als Antwortsignal (r) empfangen Signals größer ist als ein vorgegebener Wert, **dadurch gekennzeichnet, daß** die das Abfragesignal (s) eine erste Datenbitfolge (D1) als Information enthält und das Antwortsignal eine zweite Datenbitfolge (D2) als Information enthält, wobei die Datenbits der Datenbitfolgen (D1, D2) in Bitzellen gleicher Größe übertragen werden und die Abfrageeinheit (1) im Überwachungszeitraum (t4-t5) gleichzeitig Datenbits der ersten Datenbitfolge (D1) aussendet und Datenbits der zweiten Datenbitfolge (D2) empfängt.

2. Sicherungsverfahren nach Anspruch 1, **dadurch gekennzeichnet, daß** der zeitliche Abstand zwischen einer von der Abfrageeinheit (1) ausgesendeten Bitzelle der ersten Datenbitfolge (D1) und einer von der Abfrageeinheit empfangenen Bitzelle der zweiten Datenbitfolge (D2*) als Signallaufzeit ermittelt wird.

3. Sicherungsverfahren nach Anspruch 2, **dadurch gekennzeichnet, daß** die erste Datenbitfolge (D1) aus einem Abfragecode und einem an den Abfragecode anschließenden Füllcode zusammengesetzt wird.

4. Sicherungsverfahren nach Anspruch 3, **dadurch gekennzeichnet, daß** die Antworteinheit zur Erzeugung der zweiten Datenbitfolge (D2) aus dem Abfragecode einen Antwortcode (A0) generiert, der bitweise mit zeitgleich empfangenen Bits des Füllcodes codiert und ausgesendet wird.

5. Sicherungsverfahren nach Anspruch 4, **dadurch gekennzeichnet, daß** die zweite Datenbitfolge (D2*) in der Abfrageeinheit bitweise mit zeitgleich ausgesendeten Bits des Füllcodes decodiert wird und daß die Entsicherung der Sicherungseinrichtung (3) verhindert wird, wenn das Ergebnis der Decodierung von einem Berechtigungscode abweicht.

6. Sicherungsverfahren nach einem der Ansprüche 3 bis 5, **dadurch gekennzeichnet, daß** der Füllcode als Pseudo-Zufallscode generiert wird.

7. Sicherungsverfahren nach einem der vorherigen Ansprüche, **dadurch gekennzeichnet, daß** die Signalübertragung zwischen der Abfrageeinheit (1) und der Antworteinheit (2) im Vollduplexverfahren erfolgt.

8. Sicherungssystem bestehend aus einer Abfrageeinheit (1) und einer Antworteinheit (2) zur Durchführung des Sicherungsverfahren nach einem der vorherigen Ansprüche, mit einer Sende-Empfangs-Einheit (10) zum Aussenden des Abfragesignals (s) und Empfangen des während dem Aussenden des Abfragesignals (s) in Antwort auf das Abfragesignal (s) von der Antworteinheit (2) zurückgesendeten Antwortsignals (r) und mit einer Auswerteeinrichtung (11) zum Auswerten des Antwortsignals (r) und Entsichern einer Sicherungseinrichtung (3), wobei die Auswerteeinrichtung (11) Laufzeitauswertemittel aufweist, die eine Entsicherung der Sicherungseinrichtung (3) verhindern, wenn die Signallaufzeit eines von der Abfrageeinheit als Abfragesignal (s) ausgesendeten und als Antwortsignal (r) empfangenen Signals größer ist als ein vorgegebener Wert, **dadurch gekennzeichnet, daß** Mittel vorgesehen sind, die dem Abfragesignal (s) eine erste Datenbitfolge (D1) als Information enthaltend zuweisen und dem Antwortsignal eine zweite Datenbitfolge (D2) als Information enthaltend zuweisen,
wobei die Datenbits der Datenbitfolgen (D1, D2) in Bitzellen gleicher Größe übertragen werden und die Abfrageeinheit (1) im Überwachungszeitraum (t4-t5) gleichzeitig Datenbits der ersten Datenbitfolge (D1) aussendet und Datenbits der zweiten Datenbitfolge (D2) empfängt.

9. Sicherungssystem nach Anspruch 8, **dadurch gekennzeichnet, daß** die mindestens eine Antworteinheit (2) als batterielos betriebener Transponder ausgebildet ist, dem über das Abfragesignal (s) induktiv Energie zur Spannungsversorgung zuführbar ist.

10. Verwendung des Sicherungssystems nach einem der Ansprüche 8 oder 9 zur Sicherung eines Kraftfahrzeugs gegen unbefugte Benutzung.

## Claims

1. Protective method for protecting an object against unauthorised use, in which an interrogation signal (s) is emitted by an interrogation unit (1) associated with the object and in which a check is carried out as to whether at least one response unit (2) associated with a user responds to the interrogation signal (s) with a response signal (r) containing a code, as information, authorising the release of a protective device (3), wherein the release of the protective device is inhibited if a signal delay of a signal which is emitted as interrogation signal (s) and received as response signal (r) by the interrogation unit (1) during a check period (t4-t5) is greater than a predetermined value, **characterised in that** the interrogation signal (s) contains a first data bit sequence (D1) as information and the response signal contains a second data bit sequence (D2) as information, wherein the data bits of the data bit sequences (D1, D2) are transmitted in bit cells of equal size, and the interrogation unit (1) simultaneously emits data bits of the first data bit sequence (D1) and receives data bits of the second data bit sequence (D2) in the check period (t4-t5).

2. Protective method according to Claim 1, **characterised in that** the time interval between a bit cell of the first data bit sequence (D1) emitted by the interrogation unit (1) and a bit cell of the second data bit sequence (D2*) received by the interrogation unit (1) is established as the signal delay.

3. Protective method according to Claim 2, **characterised in that** the first data bit sequence (D1) is composed of an interrogation code and a filling code which adjoins the interrogation code.

4. Protective method according to Claim 3, **characterised in that** the response unit for generating the second data bit sequence (D2) generates from the interrogation code a response code (AO) which is encoded bit-by-bit with simultaneously received bits of the filling code and emitted.

5. Protective method according to Claim 4, **characterised in that** the second data bit sequence (D2*) is decoded in the interrogation unit bit-by-bit with simultaneously emitted bits of the filling code, and that the release of the protective device is inhibited if the result of the decoding differs from an authorisation code.

6. Protective method according to any one of Claims 3 to 5, **characterised in that** the filling code is generated as a pseuodorandom code.

7. Protective method according to any one of the preceding Claims 3, **characterised in that** the signal transmission between the interrogation unit (1) and the response unit (2) takes place in full-duplex mode.

8. Protective system consisting of an interrogation unit (1) and a response unit (2) for carrying out the protective method according to any one of the preceding Claims, with a transmit-receive unit (10) for emitting the interrogation signal (s) and receiving the response signal (r) returned by the response unit (2) during the emission of the interrogation signal (s) in response to the interrogation signal (s), and with an evaluation device (11) for evaluating the response signal (r) and releasing a protective device (3), wherein the evaluation device (11) comprises delay evaluation means which inhibit the release of the protective device (3) if the signal delay of a signal which is emitted as interrogation signal (s) and received as response signal (r) by the interrogation unit is greater than a predetermined value, **characterised in that** means are provided which assign to the interrogation signal (s) a first data bit sequence (D1) as containing information and to the response signal a second data bit sequence (D2) as containing information,
wherein the data bits of the data bit sequences (D1, D2) are transmitted in bit cells of equal size, and the interrogation unit (1) simultaneously emits data bits of the first data bit sequence (D1) and receives data bits of the second data bit sequence (D2) in the check period (t4-t5).

9. Protective system according to Claim 8, **characterised in that** the at least one response unit (2) is formed as a transponder which is operated without a battery and to which inductive energy can be supplied by way of the interrogation signal (s) for the voltage supply.

10. Use of the protective system according to either of Claims 8 and 9 for protecting a motor vehicle against unauthorised use.

## Revendications

1. Procédé de protection destiné à protéger un objet contre une utilisation illicite, dans lequel un signal d'interrogation (s) est émis par une unité d'interrogation (1), associée à l'objet, et dans lequel il est vérifié si au moins une unité de réponse (2) associée à un utilisateur répond au signal d'interrogation (s) avec un signal de réponse (r), qui contient une information formée par un code autorisant le déverrouillage d'un dispositif de protection (3), le déverrouillage du dispositif de protection (3) étant empêché lorsqu'un temps de transmission d'un signal émis comme signal d'interrogation (s) par l'unité d'interrogation (1) pendant un intervalle de contrôle (t4-t5) et reçu comme signal de réponse (r) est supérieur à une valeur prédéfinie, **caractérisé en ce que** le signal d'interrogation (s) contient une information formée par une première suite de bits de données (D1) et le signal de réponse (r) contient une information formée par une deuxième suite de bits de données (D2), les bits de données dans les suites de bits de données (D1, D2) étant transmis dans des cellules binaires de taille identique, et l'unité d'interrogation (1), pendant la période de contrôle (t4-t5), effectuant simultanément l'émission des bits de données de la première suite de bits de données (D1) et la réception des bits de données de la deuxième suite de bits de données (D2).

2. Procédé de protection selon la revendication 1, **caractérisé en ce que** l'intervalle de temps entre une cellule binaire émise par l'unité d'interrogation (1) dans la première suite de bits de données (D1) et une cellule binaire de la deuxième suite de bits de données (D2*) reçue par l'unité d'interrogation est déterminé comme le temps de transmission du signal.

3. Procédé de protection selon la revendication 2, **caractérisé en ce que** la première suite de bits de données (D1) est formée par un code d'interrogation et un code de remplissage consécutif au code d'interrogation.

4. Procédé de protection selon la revendication 3, **caractérisé en ce que** l'unité de réponse pour générer la deuxième suite de bits de données (D2) génère à partir du code d'interrogation un code de réponse (A0) qui est codé bit par bit avec des bits du code de remplissage reçus simultanément et est émis bit par bit.

5. Procédé de protection selon la revendication 4, **caractérisé en ce que** la deuxième suite de bits de données (D2*) est décodée dans l'unité d'interrogation (1) bit par bit avec des bits du code de remplissage émis simultanément et **en ce que** le déverrouillage du dispositif de protection (3) est empêché lorsque le résultat du décodage diffère d'un code d'accès.

6. Procédé de protection selon l'une quelconque des revendications 3 à 5, **caractérisé en ce que** le code de remplissage est généré sous forme de code pseudo-aléatoire.

7. Procédé de protection selon l'une quelconque des revendications précédentes, **caractérisé en ce que** la transmission des signaux entre l'unité d'interrogation (1) et l'unité de réponse (2) est effectuée selon un procédé de liaison bidirectionnelle simultanée.

8. Système de protection formé par une unité d'interrogation (1) et une unité de réponse (2), destiné à la mise en oeuvre du procédé de protection selon l'une quelconque des revendications précédentes, comportant un émetteur-récepteur (10) destiné à émettre le signal d'interrogation (s) et à recevoir le signal de réponse (r), renvoyé par l'unité de réponse (2) pendant l'émission du signal d'interrogation (s) en réponse au signal d'interrogation (s), et comportant un dispositif d'analyse (11) destiné à analyser le signal de réponse (r) et à déverrouiller un dispositif de protection (3), le dispositif d'analyse (11) comportant des moyens d'analyse du temps de transmission qui empêchent un déverrouillage du dispositif de protection (3) lorsque le temps de transmission d'un signal émis comme signal d'interrogation (s) par l'unité d'interrogation (1) et reçu comme signal de réponse (r) est supérieur à une valeur prédéfinie, **caractérisé en ce qu'**il est prévu des moyens qui affectent au signal d'interrogation (s) une première suite de bits de données (D1) contenant une information et affectent au signal de réponse (r) une deuxième suite de bits de données (D2) contenant une information, les bits de données des suites de bits de données (D1, D2) étant transmis dans des cellules binaires de taille identique, et l'unité d'interrogation (1), pendant la période de contrôle (t4-t5), effectuant simultanément l'émission des bits de données de la première suite de bits de données (D1) et la réception des bits de données de la deuxième suite de bits de données (D2).

9. Système de protection selon la revendication 8, **caractérisé en ce que** ladite au moins une unité de réponse (2) est conçue sous forme de transpondeur fonctionnant sans batterie, vers lequel l'énergie pour l'alimentation en tension peut être acheminée de manière inductive via le signal d'interrogation (s).

10. Utilisation du système de protection selon la revendication 8 ou 9 en vue de protéger un véhicule automobile contre une utilisation illicite.
